# EUROPÄISCHE PATENTSCHRIFT

(11) **EP 1 384 105 B1**
(45) Veröffentlichungstag und Bekanntmachung des Hinweises auf die Patenterteilung: **22.03.2006**
(21) Anmeldenummer: 02719786.2
(22) Anmeldetag: 08.02.2002
(51) Int. Cl.: G02B 27/09, G02B 6/42

(54) **STRAHLFORMUNGSVORRICHTUNG ZUR AENDERUNG DES STRAHLQUERSCHNITTS EINES LICHTSTRAHLS**
BEAM SHAPING DEVICE FOR SHAPING THE CROSS-SECTION OF A LIGHT BEAM
DISPOSITIF DE MODELAGE DE FAISCEAU PERMETTANT LE MODELAGE DE LA SECTION D'UN FAISCEAU LUMINEUX

(30) Priorität: 10.02.2001 DE 10106155
(43) Veröffentlichungstag der Anmeldung: 28.01.2004
(73) Patentinhaber: Hentze-Lissotschenko Patentverwaltungs GmbH & Co.KG, 36419 Gerstengrund (DE)
(72) Erfinder: MIKHAILOV, Alexei, 44227 Dortmund (DE)
(74) Vertreter: Basfeld, Rainer
(86) Internationale Anmeldenummer: PCT/EP2002/001336
(87) Internationale Veröffentlichungsnummer: WO 2002/065190

(56) Entgegenhaltungen:
- WO-A-00/57229
- DE-A- 19 735 094
- US-A- 5 825 551
- US-A- 6 028 722

## Beschreibung

Die vorliegende Erfindung betrifft eine Strahlformungsvorrichtung für die Formung des Querschnitts eines Lichtstrahls gemäß dem Oberbegriff des Anspruchs 1. Weiterhin betrifft die vorliegende Erfindung eine Anordnung zur Einkopplung eines von einer langgestreckten Laserlichtquelle ausgehenden Lichtstrahls mit einem länglichen Querschnitt in eine Lichtleitfaser gemäß dem Oberbegriff des Anspruchs 14.

Eine Strahlformungsvorrichtung und eine Anordnung der vorgenannten Art sind aus der WO 00/57229 A1 bekannt. In dieser internationalen Anmeldung ist eine Ausführungsform einer Strahlformungseinheit beschrieben, die im wesentlichen aus einem Polarisationswürfel und einem Spiegel mit davor angeordnetem Halbwellenlängenplättchen besteht. Ein Teil der von der Strahlformungseinheit zu formenden Teilstrahlen geht direkt durch den Polarisationswürfel hindurch, wohingegen die andere Hälfte hinsichtlich ihrer Polarisation gedreht, von dem Spiegel ebenfalls in den Polarisationswürfel eingestrahlt und in diesem reflektiert wird. Auf diese Weise werden die Teilstrahlen in dem Polarisationswürfel überlagert, so dass sie als zusammengefasster Strahl aus der Strahlformungseinheit austreten. Dabei ist der zusammengefasste Lichtstrahl in einer Querrichtung halb so groß wie der Ursprungsstrahl und in der dazu senkrechten Querrichtung ein wenig größer als der Ursprungsstrahl.

Eine weitere Strahlformungsvorrichtung und eine weitere Anordnung zur Einkopplung sind aus der US 5,825,551 bekannt. Die darin beschriebene Strahlformungsvorrichtung umfasst eine Strahlformungseinheit, die aus zwei einander gegenüberliegenden, voneinander beabstandeten, hochreflektierenden Spiegeln besteht. Durch geschickte Versetzung der beiden Spiegel gegeneinander in zwei zueinander senkrechten Richtungen können nebeneinanderliegende Teilstrahlen derart umgeformt werden, dass sie nach Hindurchtritt durch die Strahlformungseinheit untereinander liegen. Dabei verläuft ein breiter einfallender Lichtstrahl an einem ersten der beiden Spiegel vorbei und wird durch den zweiten der beiden Spiegel in zwei Teilstrahlen aufgespalten. Von den zwei Teilstrahlen läuft einer ungehindert an dem zweiten Spiegel vorbei und verlässt die Strahlformungseinheit, wohingegen der andere in Richtung auf den ersten Spiegel zurück reflektiert wird. Nach Reflexion an dem ersten Spiegel verläuft ein weiterer Teilstrahl ungehindert an dem zweiten Spiegel vorbei und verlässt die Strahlformungseinheit, wohingegen ein weiterer Teilstrahl wieder auf den zweiten Spiegel trifft und zu dem ersten zurückreflektiert wird. Dieser Vorgang wird solange wiederholt, bis sämtliche, durch die Reflektionen an dem zweiten Spiegel entstandenen Teilstrahlen von dem ersten Spiegel an dem zweiten Spiegel vorbei reflektiert wurden und die Strahlformungseinheit verlassen haben.

Eine weitere Strahlformungsvorrichtung sowie eine weitere Anordnung zur Einkopplung sind aus dem deutschen Patent DE 195 37 265 C1 bekannt. Bei der darin beschriebenen Ausführungsform einer Strahlformungseinheit wird als Strahlteilermittel ein Rhomboidprismenpaar verwendet, das die auftreffende Strahlung in zwei Teilstrahlbündel trennt. Als Strahlumlenkmittel dienen zwei in den entsprechenden Teilstrahlengängen integrierte Halbwürfelprismen, wobei aufgrund des relativ langen in dieser Strahlungsformungseinheit zurückgelegten Wegs der Teilstrahlbündel zwischen dem Rhomboidprismenpaar und den Halbwürfelprismen jeweils noch eine Linse angeordnet ist. Als Strahlvereinigungsmittel dient ein fünftes Prisma, das die auf es auftreffenden Teilstrahlbündel umlenkt und wieder zusammenführt.

Als nachteilig bei einer derartigen Strahlformungseinheit erweist sich, dass insgesamt sieben Bauteile Verwendung finden, wobei jeder der einzelnen Teilstrahlen durch acht gegebenenfalls teilweise absorbierende Oberflächen optischer Bauelemente hindurchtritt und jeweils an zwei weiteren gegebenenfalls nicht zu 100% reflektierenden Oberflächen der vorgenannten Bauteile reflektiert wird. Aufgrund der vielen Oberflächen, die transmittiert werden müssen bzw. an denen reflektiert werden muss, muss ein relativ großer Aufwand betrieben werden, um diese Oberflächen entsprechend hinsichtlich Transmission bzw. Reflexion zu vergüten. Insbesondere wenn mehrere dieser Strahlformungseinheiten hintereinander aufgebaut werden, wird eine derartige Strahlformungsvorrichtung weniger effektiv sein. Weiterhin werden aufgrund der vielen verwendeten Bauteile und aufgrund des hohen Vergütungsaufwandes derartige Strahlformungseinheiten extrem kostenintensiv sein.

Eine Anordnung der eingangs genannten Art wird in der Regel immer dann Verwendung finden, wenn beispielsweise von einem Laserdiodenbarren ausgehende Laserstrahlung auf eine Lichtleitfaser fokussiert werden soll. Insbesondere aufgrund der beinahe linienförmigen Laserlichtquelle mit einzelnen beabstandet über die Länge der Linie angeordneten Emissionszentren und der unterschiedlichen Divergenzen in Slow-Axis und Fast-Axis-Richtung erweist es sich als sinnvoll, eine Strahlformungsvorrichtung der eingangs genannten Art zu verwenden, um das von dem Laserdiodenbarren ausgehende Laserlicht mit beinahe linienförmigem Querschnitt mehrfach zu formen bzw. zusammenzufalten, so dass ein Laserstrahlbündel mit beinahe quadratischem Querschnitt entsteht, das dann einfacher auf eine Lichtleitfaser zu fokussieren ist. Die Effektivität und Wirtschaftlichkeit einer derartigen Anordnung ergibt sich verständlicherweise aus der Effektivität und Wirtschaftlichkeit der darin verwendeten Strahlformungsvorrichtung.

Das der vorliegenden Erfindung zugrundeliegende Problem ist die Schaffung einer Strahlformungsvorrichtung der eingangs genannten Art sowie einer Anordnung der eingangs genannten Art, die effektiv und kostengünstig aufgebaut sind.

Dies wird hinsichtlich der Strahlformungsvorrichtung durch die kennzeichnenden Merkmale des Anspruchs 1 und hinsichtlich der Anordnung durch die in Anspruch 14 beschriebene Wahl einer Strahlformungsvorrichtung mit den kennzeichnenden Merkmalen eines der Ansprüche 1 bis 13 erzielt.

Gemäß Anspruch 1 umfassen die Strahlvereinigungsmittel zwei spiegelnde Flächen, die einen Winkel miteinander einschließen, wobei jeder der von den Strahlvereinigungsmitteln zusammenzufügenden Teilstrahlen an einer der spiegelnden Flächen reflektiert werden kann, wobei der an dem als Strahlteilermittel dienenden Strahlvereinigungsmittel vorbei verlaufende Teilstrahl von den Strahlumlenkmitteln derart umgelenkt werden kann, dass er auf die zweite der spiegelnden Flächen auftrifft und von dieser in die Richtung des die Strahlformungseinheit verlassenden Lichtstrahls reflektiert wird, und wobei der andere der beiden Teilstrahlen direkt auf die erste der beiden spiegelnden Flächen treffen und von dieser in die Richtung des die Strahlformungseinheit verlassenden Lichtstrahls reflektiert werden kann. Durch eine derartige Maßnahme wird die Zahl der Transmissionen bzw. Reflexionen der einzelnen Teilstrahlen drastisch reduziert. Weiterhin kann eine erfindungsgemäße Strahlformungseinheit im Idealfall aus zwei einzelnen optischen Bauteilen bestehen, wohingegen im Stand der Technik für die gleiche Funktion sieben Bauteile benötigt werden. Insbesondere wird einer der Teilstrahlen ohne vorherigen Durchtritt durch weitere optische Bauteile direkt auf die Strahlvereinigungsmittel auftreffen, so dass für diesen Teilstrahl die Zahl der Transmission bzw. Reflexionen minimiert ist. Vorteilhafterweise wird der zweite der Teilstrahlen zur Aufteilung des Strahls an dem als Strahlvereinigungsmittel und Strahlteilermittel dienenden Bauteil ungehindert vorbei verlaufen und von den Strahlumlenkmitteln auf die als Strahlvereinigungsmittel dienenden funktionalen Abschnitte des als Strahlvereinigungsmittel und Strahlteilermittel dienenden Bauteils umgelenkt. Auch durch diese Maßnahme wird die Zahl der Transmissionen und Reflexionen des zweiten Teilstrahls minimiert.

Insbesondere für den Fall, dass es sich bei den spiegelnden Flächen um Außenflächen der Strahlvereinigungsmittel handelt, wird jeder der Teilstrahlen nur eine Reflexion an diesem Bauteil, nicht jedoch eine zusätzliche Transmission erfahren.

Gemäß einer bevorzugten Ausführungsform der vorliegenden Erfindung ist als Strahlvereinigungsmittel und gleichzeitig als Strahlteilermittel ein einzelnes Prisma vorgesehen, wobei die die Teilstrahlen reflektierenden spiegelnden Flächen als, vorzugsweise verspiegelte, Prismenflächen dieses Prismas ausgebildet sind. Ein derartiges Prisma stellt eine ausgesprochen einfache aber trotzdem sehr effektive Ausgestaltung des gleichzeitig als Strahlvereinigungsmittel und Strahlteilermittel dienenden Bauteils dar.

Vorteilhafterweise kann das als Strahlteilermittel und als Stahlvereinigungsmittel dienende Prisma eine als gleichschenklig rechtwinkliges Dreieck ausgebildete Grundfläche aufweisen, wobei die spiegelnden Flächen diejenigen Prismenflächen sind, die sich jeweils zwischen den Katheten der Grundflächen erstrecken, so dass die spiegelnden Flächen einen Winkel von 90° miteinander einschließen. Durch Wahl eines derartigen rechtwinkligen Prismas kann auf einfachste Weise die gewünschte Strahlvereinigungsfunktion realisiert werden, in dem nämlich die beiden unter einem Winkel von 90° zueinander stehenden spiegelnden Flächen jeweils unter einem Winkel von 45° bzw. -45° zu den aus entgegen gesetzten Richtungen auf das Prisma zulaufenden Teilstrahlen ausgerichtet werden.

Hierbei kann das als Strahlteilermittel bzw. als Strahlvereinigungsmittel dienende Prisma derart in der Strahlformungseinheit angeordnet sein, dass ein zu formender auf die Strahlformungseinheit fallender Lichtstrahl in einer ersten Richtung, die zu der Ausbreitungsrichtung des Lichtstrahls im wesentlichen senkrecht ist, halbiert wird, derart, dass einer der beiden durch diese Halbierung entstehenden Teilstrahlen an dem Prisma vorbei auf die Strahlumlenkmittel verläuft und der andere der beiden durch diese Halbierung entstehenden Teilstrahlen direkt auf die erste der beiden spiegelnden Flächen trifft und von dieser in die Richtung des die Strahlformungseinheit verlassenden Lichtstrahls reflektiert wird. Durch diese Halbierung der Strahlen an dem Prisma wird der erste der beiden Teilstrahlen in der gesamten Strahlformungseinheit letztlich nur eine Reflexion an der ersten der beiden spiegelnden Flächen und keine Transmission erfahren. Der andere der Teilstrahlen wird entsprechend der Wahl der Strahlumlenkmittel zwei bis vier Reflexionen bzw. Transmissionen an den Strahlumlenkmitteln und genau eine Reflexion an der zweiten spiegelnden Fläche, jedoch weder an den Strahlteilermitteln noch an den Strahlvereinigungsmitteln eine zusätzliche Transmission erfahren. Auf diese Weise wird die Zahl der Transmissionen und Reflexionen minimiert bei gleichzeitigem extrem kostengünstigem Aufbau der erfindungsgemäßen Strahlformungsvorrichtung.

Vorzugsweise ist das als Strahlteilermittel bzw. als Strahlvereinigungsmittel dienende Prisma derart in der Strahlformungseinheit angeordnet, dass ein auf die Strahlformungseinheit auftreffender Lichtstrahl parallel zu einer Prismenfläche verläuft, die die beiden als spiegelnde Flächen ausgebildeten Prismenflächen miteinander verbindet. Hierdurch wird gewährleistet, dass bei entsprechender Justierung des zu formenden Lichtstrahls exakt die eine Hälfte des Strahls auf die erste spiegelnde Fläche auftrifft und die andere Hälfte des Strahls an dem Prisma vorbei verläuft in Richtung auf die Strahlumlenkmittel und eben nicht Teile des Strahls an irgendwelchen zusätzlichen Rändern oder dergleichen absorbiert oder unkontrolliert wegreflektiert werden.

Hierbei kann vorgesehen sein, dass der an dem als Strahlteilermittel bzw. als Strahlvereinigungsmittel dienenden Prisma vorbei verlaufende Teilstrahl in Ausbreitungsrichtung hinter dem Prisma auf die Strahlumlenkmittel trifft, die den Teilstrahl derart umlenken, dass er in einer Richtung entgegen der Ausbreitungsrichtung auf die zweite der spiegelnden Flächen auftrifft und von dieser in die Richtung des die Strahlformungseinheit verlassenden Lichtstrahls reflektiert wird. Auf diese Weise ergibt sich ein relativ kompakter Aufbau einer erfindungsgemäßen Strahlformungsvorrichtung bzw. Strahlformungseinheit.

Gemäß einer bevorzugten Ausführungsform der vorliegenden Erfindung sind die Strahlumlenkmittel als Abbildungseinheit ausgeführt, die eine 1:-1-Abbildung des auf sie auftreffenden Teilstrahls auf die zweite spiegelnde Fläche bewirken. Durch eine derartige Abbildung wird erreicht, dass die beiden Teilstrahlen optimal von den Strahlvereinigungsmitteln zusammengeführt werden können, weil insbesondere keine oder kaum unterschiedliche Divergenzen zwischen den beiden Teilstrahlen auftreten können.

Vorzugsweise kann hierbei die Abbildungseinheit im wesentlichen die Form einer plankonvexen Linse aufweisen, wobei der Teilstrahl durch die konvexe Linsenflächen in die Abbildungseinheit eintreten kann, an der planen Fläche, die vorzugsweise verspiegelt ist, reflektiert werden kann und aus der konvexen Linsenfläche in Richtung auf die zweite spiegelnde Fläche der Strahlvereinigungsmittel austreten kann. Auf diese Weise wird die Umlenkung und die damit verbundene 1:-1-Abbildung durch zwei Transmissionen und eine Reflexion realisiert, so dass insgesamt eine sehr effektive Formung des Strahlquerschnitts stattfindet.

Gemäß einer weiteren Ausführungsform der vorliegenden Erfindung sind die Strahlumlenkmittel als Prisma ausgebildet, wobei der auf das Prisma auftreffende Teilstrahl von diesem in eine Richtung entgegen der Ausbreitungsrichtung auf die zweite spiegelnde Fläche der Strahlvereinigungsmittel umgelenkt werden kann. Die Wahl eines Prismas als Strahlumlenkmittel bietet sich insbesondere bei sehr ausgedehnten Strahlquerschnitten an, weil durch die Einbringung eines Prismas in den Strahlengang keine zusätzlichen Abbildungsfehler auftreten können, wie dies bei einer Linse oder dergleichen der Fall wäre.

Hierbei kann das als Umlenkmittel dienende Prisma ebenfalls eine als gleichschenklig rechtwinkliges Dreieck ausgebildete Grundfläche aufweisen, wobei der in das Prisma eintretende Teilstrahl senkrecht durch die die Grundseiten dieser Dreiecke miteinander verbindende Prismenfläche hindurchtritt und an jeder der beiden anderen Prismenflächen unter einem Winkel von im wesentlichen 45° reflektiert wird, wobei vorzugsweise die beiden Prismenflächen, an denen der Teilstrahl reflektiert wird, verspiegelt sind. Ein derartig ausgestaltetes Strahlumlenkmittel zeichnet sich durch einen extrem einfachen und kostengünstigen Aufbau bei hoher Funktionalität aus.

Vorteilhafterweise kann die Strahlformungsvorrichtung mehr als eine Strahlformungseinheit, insbesondere drei oder vier Strahlformungseinheiten umfassen, die derart nacheinander angeordnet sind, dass der Querschnitt des Lichtstrahls in jeder der Strahlformungseinheiten in einer ersten Richtung verkleinert und einer dazu senkrechten zweiten Richtung vergrößert wird. Hierbei kann der Querschnitt des aus der Strahlformungseinheit beziehungsweise aus einer der Strählformungseinheiten austretenden Lichtstrahls im Vergleich zu dem Querschnitt des in die Strahlformungseinheit beziehungsweise eine der Strahlformungseinheiten eintretenden Lichtstrahls in der ersten Richtung halbiert und in der zweiten dazu senkrechten Richtung verdoppelt sein. Beispielsweise durch die Hintereinanderschaltung von vier derartigen Strahlformungseinheiten würde damit der Lichtstrahl in der einen ersten Richtung um einen Faktor 16 gestaucht und in der zweiten dazu senkrechten Richtung um einen Faktor 16 auseinander gezerrt. Damit eignet sich eine derartige Strahlformungsvorrichtung insbesondere für die eingangs genannte Anordnung zur Einkopplung des beispielsweise aus einem Laserdiodenbarren austretenden Laserstrahls in eine Lichtleitfaser.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1a: eine schematische Ansicht einer erfindungsgemäßen Strahlformungsvorrichtung;
- Fig. 1b: eine Ansicht der Strahlformungsvorrichtung gemäß dem Pfeil Ib in Fig. 1a,
- Fig. 1c: schematisch den Querschnitt des mit der Strahlformungsvorrichtung zu formenden Strahls;
- Fig. 1d: schematisch den Querschnitt des von der Strahlformungsvorrichtung geformten Strahls;
- Fig. 2a: eine schematische Ansicht einer weiteren Ausführungsform einer erfindungsgemäßen Strahlformungsvorrichtung;
- Fig. 2b: eine Ansicht gemäß dem Pfeil IIb in Fig. 2a;
- Fig. 3: eine schematische Ansicht einer weiteren Ausführungsform einer erfindungsgemäßen Strahlformungsvorrichtung mit einer Laserlichtquelle und einer Glasfaser sowie entsprechenden Fokussierungslinsen;
- Fig. 4: eine perspektivische Ansicht der Ausführungsform gemäß Fig. 2.

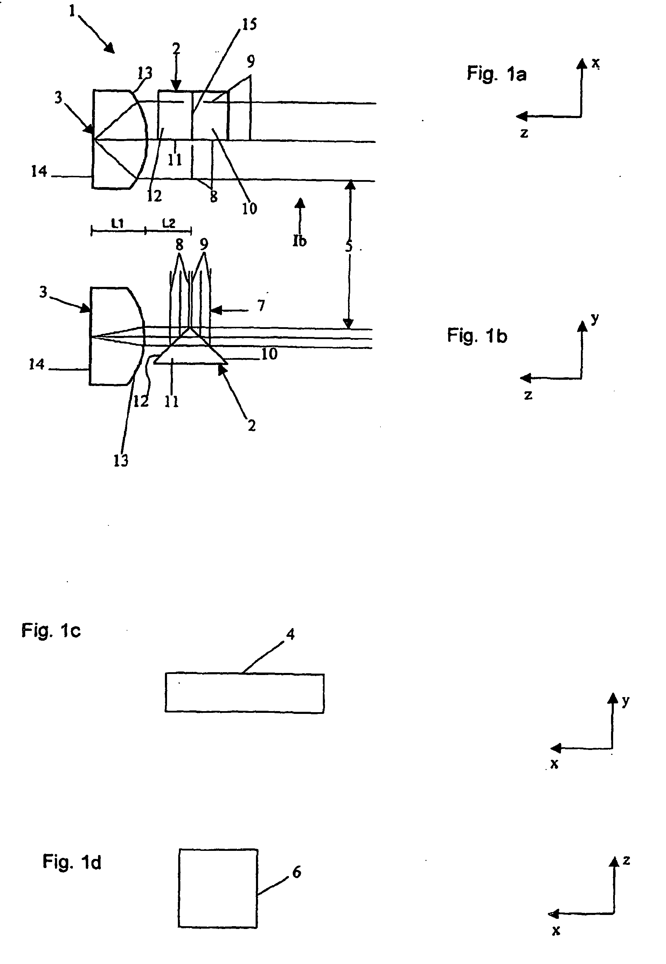

Aus Fig. 1a und Fig. 1b ist eine erfindungsgemäße Strahlformungsvorrichtung ersichtlich, die eine Strahlformungseinheit 1 umfasst, die aus einem als Prisma ausgeführten Strahlteiler- und Strahlvereinigungsmittel 2 sowie einem als Abbildungseinheit ausgeführten Strahlumlenkmittel 3 besteht. Der Querschnitt 4 des von der Strahlformungseinheit 1 zu formenden Lichtstrahls 5 ist aus Fig. 1c ersichtlich. Der Querschnitt 6 des von der Strahlformungseinheit 1 geformten Lichtstrahles 7 ist aus Fig. 1d ersichtlich.

Aus Fig. 1a und Fig. 1b wird deutlich, dass der auf die Strahlformungseinheit 1 auftreffende Lichtstrahl 5 einen relativ breiten und flachen Querschnitt 4 aufweist. Das Prisma ist derart angeordnet, dass der zu formende Lichtstrahl 5 durch das Prisma in zwei gleich breite Teilstrahlen 8 und 9 aufgeteilt wird. In Fig. 1a verläuft der Teilstrahl 8 unter dem Prisma vorbei, wohingegen der Teilstrahl 9 auf die dem einfallenden zu formenden Strahl 5 zugewandte Seite des Prismas auftrifft. Das Prisma weist zwei als gleichschenklig rechtwinklige Dreiecke ausgebildete Grundflächen 11 und drei rechteckige Prismenflächen auf. Zwei dieser Prismenflächen sind verspiegelt und bilden somit spiegelnde Flächen 10, 12, von denen die Teilstrahlen 8, 9 reflektiert werden können. Die spiegelnden Flächen 10, 12 sind jeweils die Verbindungsflächen zwischen den Katheten der Grundflächen 11 und schließen somit längs der Scheitellinie 15 einen rechten Winkel miteinander ein.

Die Grundseiten der Grundflächen 11 des Prismas erstrecken sich in dem in Fig. 1a und Fig. 1b angegebenen Bezugssystem in Z-Richtung, so dass die dem Teilstrahl 9 zugewandte spiegelnde Fläche 10 unter einem Winkel von 45° zur Y-Richtung ausgerichtet ist, so dass der in Z-Richtung verlaufende Teilstrahl 9 durch Reflexion an der spiegelnden Fläche 10 in Y-Richtung umgelenkt wird.

Der in Fig. 1a an der unteren Grundfläche 11 des Prismas vorbeilaufende Teilstrahl 8 tritt in die Abbildungseinheit ein, die in Fig. 1a in Z-Richtung hinter dem Prisma 2 angeordnet ist. Die Abbildungseinheit ist in dem abgebildeten Ausführungsbeispiel als sphärische bzw. leicht asphärische Plankonvexlinse ausgeführt, mit einer vorderen dem Prisma zugewandten konvexen Linsenfläche 13 und einer hinteren von dem Prisma abgewandten planen verspiegelten Fläche 14. Wie aus Fig. 1a deutlich ersichtlich ist, tritt der Teilstrahl 8 durch die Linsenfläche 13 in die Abbildungseinheit ein und wird an der verspiegelten Fläche 14 derart reflektiert, dass er in X-Richtung versetzt wiederum aus der Linsenfläche 13 austritt und auf die zweite spiegelnde Fläche 12 des Prismas auftrifft. Dort wird der Teilstrahl 8 aufgrund der Orientierung der spiegelnde Fläche 12 unter einem Winkel von 45° zur Vertikalen bzw. zur Y-Richtung nach oben in Y-Richtung abgelenkt, wie dies aus Fig. 1b deutlich ersichtlich ist.

Durch die Abbildungseinheit wird eine 1:-1 - Abbildung des Teilstrahles 8 bewirkt. Insbesondere ist dafür eine Anordnung sinnvoll, wie sie in Fig. 1a abgebildet ist, bei der die Scheitellinie 15 des Prismas parallel zur spiegelnden Fläche 14 der Abbildungseinheit ausgerichtet ist und wobei der Abstand der Scheitellinie 15 zum vordersten Rand der Linsenfläche 13 der Abbildungseinheit gleich der Brennweite L₂ der Linsenfläche 13 ist. Gleichzeitig entspricht die Dicke der Abbildungseinheit, das heißt die Distanz zwischen dem vordersten Punkt der Linsenfläche 13 und der verspiegelten Fläche 14 der Größe L₁, die dem Produkt aus L₂ und dem Brechungsindex des Mediums entspricht, aus dem die Abbildungseinheit gefertigt ist.

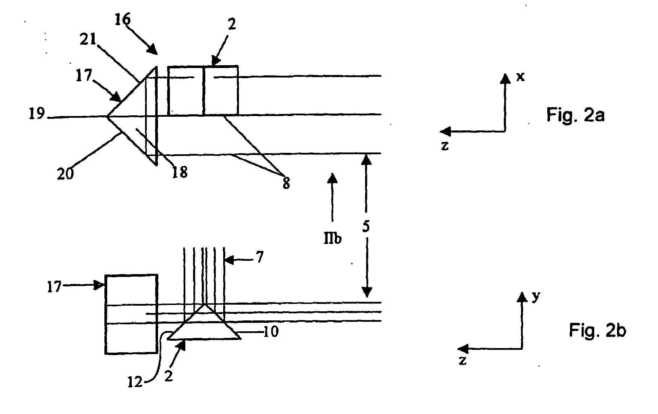

Aus Fig. 2 ist eine weitere Ausführungsform einer erfindungsgemäßen Strahlformungsvorrichtung ersichtlich. Bei dieser Ausführungsform findet eine Strahlformungseinheit 16 Verwendung, die aus einem als erstem Prisma ausgeführten Strahlteiler- und Strahlvereinigungsmittel 2 und einem als zweitem Prisma ausgeführten Strahlumlenkmittel 17 besteht. In Fig. 2a und Fig. 2b sind gleiche Teile mit den gleichen Bezugszeichen wie in Fig. 1 versehen. Anstelle der Abbildungseinheit in Fig. 1 ist bei der Strahlformungseinheit 16 das zweite Prisma vorgesehen. Bei diesem Prisma handelt es sich ebenfalls um ein senkrechtes Prisma, das heißt um ein Prisma mit einem Scheitelwinkel von 90°. Das Prisma ist so orientiert, dass die Grundflächen 18 in der XZ-Ebene liegen und die Scheitellinie 19 auf der von dem ersten Prisma abgewandten Seite des zweiten Prismas angeordnet ist und exakt mit der in Fig. 2a unteren Begrenzung des ersten Prismas in Z-Richtung fluchtet.

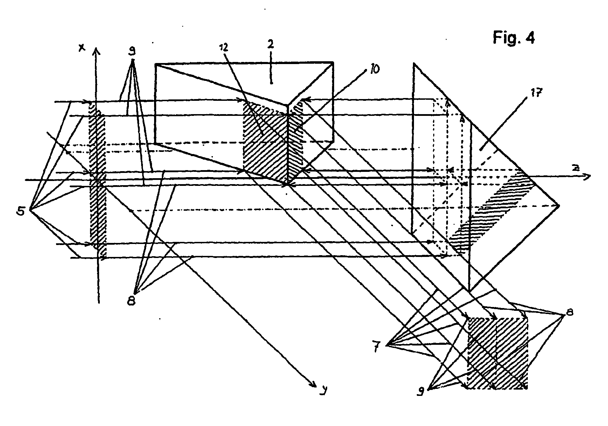

Wie aus Fig. 2 ersichtlich ist, tritt der Teilstrahl 8 durch die die Grundflächen 18 miteinander verbindende Prismenfläche in das zweite Prisma ein und wird dort an den beiden verspiegelten Prismenflächen 20, 21 derart reflektiert, dass er in Richtung auf das Prisma aus der Grundfläche 18 heraustritt und äquivalent zu dem Teilstrahl 9 an der spiegelnden Fläche 12 des ersten Prismas in Y-Richtung reflektiert wird. Die Ausführungsform gemäß Fig. 2 ist zur Verdeutlichung in Fig. 4 perspektivisch dargestellt.

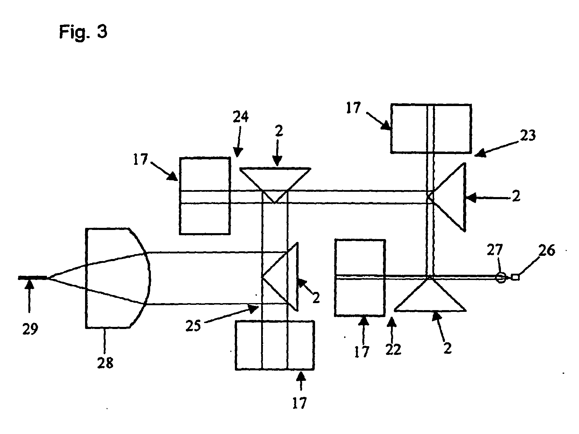

Aus Fig. 3 ist eine Strahlformungsvorrichtung ersichtlich, die vier Strahlformungseinheiten 22, 23, 24, 25 umfasst. Bei den Strahlformungseinheiten 22, 23, 24, 25 handelt es sich jeweils um identische Einheiten, die der Strahlformungseinheit 16 aus Fig. 2 entsprechen. Jede dieser Strahlformungseinheiten 22, 23, 24, 25 umfasst somit ein erstes Prisma sowie ein zweites Prisma, die ein Strahlteiler- und Strahlvereinigungsmittel 2 sowie ein Strahlumlenkmittel 17 bilden.

Das von einer schematisch als Punkt abgebildeten als Laserdiodenbarren ausgeführten Laserlichtquelle 26 ausgehende Licht trifft nach dem Hindurchtritt durch eine als Zylinderlinse ausgeführte Kollimiereinheit 27 auf eine erste Strahlformungseinheit 22. In dieser Strahlformungseinheit wird der Querschnitt des Lichtstrahls entsprechend den Abbildungen Fig. 1c und Fig. 1d verändert. Daran anschließend trifft der Lichtstrahl nacheinander auf die weiteren Strahlformungseinheiten 23, 24, 25, wo jeweils der Querschnitt des Lichtstrahls entsprechend verändert wird. Aufgrund der Tatsache, dass der Lichtstrahl in jeder der Strahlformungseinheiten 22, 23, 24, 25 um einen Faktor 2 in der Breite verkürzt und einen Faktor 2 in der Höhe vergrößert wird, wird der Lichtstrahl nach dem Hindurchtritt durch die vierte Strahlformungseinheit 25 eine um einen Faktor 16 reduzierte Breite sowie eine um einen Faktor 16 vergrößerte Höhe seines Querschnittes aufweisen. Dies wird in Fig. 3 schematisch angedeutet. Nach dem Austritt aus der letzten Strahlformungseinheit 25 trifft der Lichtstrahl auf eine als im wesentlichen sphärische Linse ausgeführte Fokussiereinheit 28, vermittels der er in eine Lichtleitfaser 29 eingekoppelt werden kann.

## Patentansprüche

1. Strahlformungsvorrichtung für die Formung des Querschnitts (4, 6) eines Lichtstrahls (5, 7) umfassend mindestens eine Strahlformungseinheit (1, 16, 22, 23, 24, 25), mit
a) Strahlteilermitteln (2),
b) Strahlumlenkmitteln (3, 17), sowie
c) Strahlvereinigungsmitteln (2),
d) wobei die Strahlteilermittel (2) einen auf die Strahlformungseinheit (1, 16, 22, 23, 24, 25) auftreffenden Lichtstrahl (5) in zwei Teilstrahlen (8, 9) aufteilen können,
e) wobei die Strahlvereinigungsmittel (2) auch als Strahlteilermittel (2) dienen,
f) wobei einer der beiden Teilstrahlen (8) an den als Strahlteilermitteln (2) dienenden Strahlvereinigungsmitteln (2) vorbei auf die Strahlumlenkmittel (3) verlaufen und von den Strahlumlenkmitteln (2, 17) umgelenkt werden kann, wohingegen der andere Teilstrahl (9) direkt auf die Strahlvereinigungsmittel (2) auftreffen kann,
g) wobei die Strahlvereinigungsmittel (2) die beiden Teilstrahlen (8, 9) zusammenfügen können, derart, dass der Querschnitt (6) des aus der Strahlformungseinheit (1, 16, 22, 23, 24, 25) austretenden Lichtstrahls (7) im Vergleich zu dem Querschnitt (4) des in die Strahlformungseinheit (1, 16, 22, 23, 24, 25) eintretenden Lichtstrahls (5) in einer ersten Richtung (X) verkleinert und in einer zweiten dazu senkrechten Richtung (Y, Z) vergrößert ist,
**dadurch gekennzeichnet**,
h) **dass** die Strahlvereinigungsmittel (2) zwei spiegelnde Flächen (10, 12) umfassen, die einen Winkel miteinander einschließen, wobei jeder der von den Strahlvereinigungsmitteln zusammenzufügenden Teilstrahlen (8, 9) an einer der spiegelnden Flächen (10, 12) reflektiert werden kann,
i) **dass** der an dem als Strahlteilermittel (2) dienenden Strahlvereinigungsmittel (2) vorbei verlaufende Teilstrahl (B) von den Strahlumlenkmitteln (3, 17) derart umgelenkt werden kann, dass er auf die zweite der spiegelnden Flächen (12) auftrifft und von dieser in die Richtung (Y) des die Strahlformungseinheit (1, 16, 22, 23, 24, 25) verlassenden Lichtstrahls (7) reflektiert wird, und
j) **dass** der andere der beiden Teilstrahlen (9) direkt auf die erste der beiden spiegelnden Flächen (10) treffen und von dieser in die Richtung (Y) des die Strahlformungseinheit (1, 16, 22, 23, 24, 25) verlassenden Lichtstrahls (7) reflektiert werden kann.

2. Strahlformungsvorrichtung nach Anspruch 1, **dadurch gekennzeichnet, dass** als Strahlvereinigungsmittel (2) und gleichzeitig als Strahlteilermittel (2) ein einzelnes Prisma vorgesehen ist, wobei die die Teilstrahlen (8, 9) reflektierenden spiegelnden Flächen (10, 12) als, vorzugsweise verspiegelte, Prismenflächen dieses Prismas ausgebildet sind.

3. Strahlformungsvorrichtung nach Anspruch 2, **dadurch gekennzeichnet, dass** das als Strahlteilermittel (2) und als Strahlvereinigungsmittel (2) dienende Prisma eine als gleichschenklig rechtwinkliges Dreieck ausgebildete Grundfläche (11) aufweist, wobei die spiegelnden Flächen (10, 12) diejenigen Prismenflächen sind, die sich jeweils zwischen den Katheten der Grundflächen (11) erstrecken, so dass die spiegelnden Flächen (10, 12) einen Winkel von 90° miteinander einschließen.

4. Strahlformungsvorrichtung nach einem der Ansprüche 2 oder 3, **dadurch gekennzeichnet, dass** das als Strahlteilermittel (2) bzw. als Strahlvereinigungsmittel (2) dienende Prisma derart in der Strahlformungseinheit (1, 16, 22, 23, 24, 25) angeordnet ist, dass ein zu formender auf die Strahlformungseinheit (1, 16, 22, 23, 24, 25) fallender Lichtstrahl (5) in einer ersten Richtung (X), die zu der Ausbreitungsrichtung (Z) des Lichtstrahls (5) im wesentlichen senkrecht ist, halbiert wird, derart, dass einer der beiden durch diese Halbierung entstehenden Teilstrahlen (8) an dem Prisma vorbei auf die Strahlumlenkmittel (3) verläuft und der andere der beiden durch diese Halbierung entstehenden Teilstrahlen (9) direkt auf die erste der beiden spiegelnden Flächen (10) trifft und von dieser in die Richtung (Y) des die Strahlformungseinheit (1, 16, 22, 23, 24, 25) verlassenden Lichtstrahls (7) reflektiert wird.

5. Strahlformungsvorrichtung nach einem der Ansprüche 2 bis 4, **dadurch gekennzeichnet, dass** das als Strahlteilermittel (2) bzw. als Strahlvereinigungsmittel (2) dienende Prisma derart in der Strahlformungseinheit (1, 16, 22, 23, 24, 25) angeordnet ist, dass ein auf die Strahlformungseinheit (1, 16, 22, 23, 24, 25) auftreffender Lichtstrahl (5) parallel zu einer Prismenfläche verläuft, die die beiden als spiegelnden Flächen (10, 12) ausgebildeten Prismenflächen miteinander verbindet.

6. Strahlformungsvorrichtung nach einem der Ansprüche 2 bis 5, **dadurch gekennzeichnet, dass** das als Strahlteilermittel (2) bzw. als Strahlvereinigungsmittel (2) dienende Prisma derart in der Strahlformungseinheit (1, 16, 22, 23, 24, 25) angeordnet ist, dass die beiden spiegelnden Flächen (10, 12) mit der Ausbreitungsrichtung (Z) eines von der Strahlformungseinheit (1, 16, 22, 23, 24, 25) zu formenden Lichtstrahls (5) einen Winkel von 45° bzw. -45° einschließen.

7. Strahlformungsvorrichtung nach einem der Ansprüche 4 bis 6, **dadurch gekennzeichnet, dass** der an dem als Strahlteilermittel (2) bzw. als Strahlvereinigungsmittel (2) dienenden Prisma vorbei verlaufende Teilstrahl (8) in Ausbreitungsrichtung (Z) hinter dem Prisma auf die Strahlumlenkmittel (3, 17) trifft, die den Teilstrahl (8) derart umlenken, dass er in einer Richtung entgegen der Ausbreitungsrichtung (Z) auf die zweite der spiegelnden Flächen (12) auftrifft und von dieser in die Richtung (Y) des die Strahlformungseinheit (1, 16, 22, 23, 24, 25) verlassenden Lichtstrahls (7) reflektiert wird.

8. Strahlformungsvorrichtung nach einem der Ansprüche 1 bis 7, **dadurch gekennzeichnet, dass** die Strahlumlenkmittel (3) als Abbildungseinheit ausgeführt sind, die eine 1:-1-Abbildung des auf sie auftreffenden Teilstrahls (8) auf die zweite spiegelnde Fläche (12) bewirken.

9. Strahlformungsvorrichtung nach Anspruch 8, **dadurch gekennzeichnet, dass** die Abbildungseinheit im wesentlichen die Form einer Plankonvexlinse aufweist, wobei der Teilstrahl (8) durch die konvexe Linsenfläche (13) in die Abbildungseinheit eintreten kann, an der planen Fläche (14), die vorzugsweise verspiegelt ist, reflektiert werden kann und aus der konvexen Linsenfläche (3) in Richtung auf die zweite spiegelnde Fläche (12) der Strahlvereinigungsmittel (2) austreten kann.

10. Strahlformungsvorrichtung nach einem der Ansprüche 1 bis 7, **dadurch gekennzeichnet, dass** die Strahlumlenkmittel (17) als Prisma ausgebildet sind, wobei der auf das Prisma auftreffende Teilstrahl (8) von diesem in eine Richtung entgegen der Ausbreitungsrichtung (Z) auf die zweite spiegelnde Fläche (12) der Strahlvereinigungsmittel (2) umgelenkt werden kann.

11. Strahlformungsvorrichtung nach Anspruch 10, **dadurch gekennzeichnet, dass** das als Strahlumlenkmittel (17) dienende Prisma ebenfalls eine als gleichschenklig rechtwinkliges Dreieck ausgebildete Grundfläche (18) aufweist, wobei der in das Prisma eintretende Teilstrahl (8) senkrecht durch die die Grundseiten dieser Dreiecke miteinander verbindende Prismenfläche hindurchtritt und an jeder der beiden anderen Prismenflächen (20, 21) unter einem Winkel von im wesentlichen 45° reflektiert wird, wobei vorzugsweise die beiden Prismenflächen (20, 21), an denen der Teilstrahl (8) reflektiert wird, verspiegelt sind.

12. Strahlformungsvorrichtung nach einem der Ansprüche 1 bis 11, **dadurch gekennzeichnet, dass** die Strahlformungsvorrichtung mehr als eine Strahlformungseinheit (22, 23, 24, 25), insbesondere drei oder vier Strahlformungseinheiten (22, 23, 24, 25) umfasst, die derart nacheinander angeordnet sind, dass der Querschnitt des Lichtstrahls in jeder der Strahlformungseinheiten (22, 23, 24, 25) in einer ersten Richtung verkleinert und in einer dazu senkrechten zweiten Richtung vergrößert wird.

13. Strahlformungsvorrichtung nach einem der Ansprüche 1 bis 12, **dadurch gekennzeichnet, dass** der Querschnitt (6) des aus der Strahlformungseinheit (1, 16, 22, 23, 24, 25) oder aus einer der Strahlformungseinheiten (1, 16, 22, 23, 24, 25) austretenden Lichtstrahls (7) im Vergleich zu dem Querschnitt (4) des in die Strahlformungseinheit (1, 16, 22, 23, 24, 25) oder eine der Strahlformungseinheiten (1, 16, 22, 23, 24, 25) eintretenden Lichtstrahls (5) in einer ersten Richtung (X) halbiert und in einer zweiten dazu senkrechten Richtung (XZ) verdoppelt ist.

14. Anordnung zur Einkopplung eines von einer langgestreckten Laserlichtquelle (22) ausgehenden Lichtstrahls (5) mit einem länglichen Querschnitt (4) in eine Lichtleitfaser (29), umfassend eine Laserlichtquelle (26), eine in Strahlrichtung (Z) hinter dieser angeordnete Kollimiereinheit (27), eine Strahlformungsvorrichtung mit den Merkmalen eines der Ansprüche 1 bis 13 sowie eine hinter der Strahlformungsvorrichtung angeordnete Fokussiereinheit (28), die den auf sie auftreffenden Lichtstrahl auf eine Lichtleitfaser (29) fokussieren kann.

## Claims

1. Beam-shaping device for shaping the cross section (4, 6) of a light beam (5, 7), comprising at least one beam-shaping unit (1, 16, 22, 23, 24, 25), having
a) beam splitter means (2),
b) beam-deflecting means (3, 17), and
c) beam-recombining means (2),
d) in which the beam splitter means (2) can split a light beam (5) Impinging on the beam-shaping unit (1, 16, 22, 23, 24, 25) into two component beams (8, 9),
e) in which the beam recombining means (2) also serve as beam splitter means (2),
f) in which one of the two component beams (8) can run past the beam recombining means (2) serving as beam splitter means (2) onto the beam deflecting means (3) and can be deflected by the beam deflecting means (2, 17), whereas the other component beam (9) can impinge directly onto the beam recombining means (2),
g) in which the beam recombining means (2) can merge the two component beams (8, 9) in such a way that, by comparison with the cross section (4) of the light beam (5) entering the beam shaping unit (1, 16, 22, 23, 24, 25), the cross section (6) of the light beam (7) emerging from the beam shaping unit (1, 16, 22, 23, 24, 25) is reduced in a first direction (X) and is enlarged in a second direction (Y, Z) perpendicular thereto, **characterized**
h) **in that** the beam recombining means (2) comprise two specular surfaces (10, 12) which enclose an angle with one another, it being possible for each of the component beams (8, 9) to be merged by the beam recombining means to be reflected at one of the specular surfaces (10, 12), and
i) **in that** the component beam (8) running past the beam recombining means (2) serving as beam splitter means (2) can be deflected by the beam deflecting means (3, 17) in such a way that it impinges on the second of the specular surfaces (12) and is reflected by the latter in the direction (Y) of the light beam (7) leaving the beam shaping unit (1, 16, 22, 23, 24, 25), and
j) **in that** the other one of the two component beams (9) can directly strike the first of the two specular surfaces (10) and be reflected by the latter in the direction (Y) of the light beam (7) leaving the beam shaping means (1, 16, 22, 23, 24, 25).

2. Beam-shaping device according to Claim 1, **characterized in that** a single prism is provide as beam recombining means (2) and, simultaneously, as beam splitter means (2), the specular surfaces (10, 12) reflecting the component beams (8, 9) being designed as preferably silvered prism faces of this prism.

3. Beam-shaping device according to Claim 2, **characterized in that** the prism serving as beam splitter means (2) and as beam recombining means (2) has a base face (11) designed as an isosceles right-angled triangle, the specular surfaces (10, 12) being those prism faces which extend in each case between the perpendicular sides of the base face (11), such that the specular surfaces (10, 12) enclose an angle of 90° with one another.

4. Beam-shaping device according to either of Claims 2 and 3, **characterized in that** the prism serving as beam splitter means (2) and as beam recombining means (2) is arranged in the beam shaping unit (1, 16, 22, 23, 24, 25) in such a way that a light beam (5) to be shaped and falling onto the beam shaping unit (1, 16, 22, 23, 24, 25) is bisected in a first direction (X), which is substantially perpendicular to the propagation direction (Z) of the light beam (5), in such a way that one of the two component beams (8) produced by this bisection runs past the prism onto the beam deflecting means (3), and the other of the two component beams (9) produced by this bisection directly strikes the first of the two specular surfaces (10) and is reflected by it in the direction (Y) of the light beam (7) leaving the beam shaping unit (1, 16, 22, 23, 24, 25).

5. Beam-shaping device according to one of Claims 2 to 4, **characterized in that** the prism serving as beam splitter means (2) and as beam recombining means (2) is arranged in the beam shaping unit (1, 16, 22, 23, 24, 25) in such a way that a light beam (5) striking the beam-shaping unit (1, 16, 22, 23, 24, 25) runs parallel to a prism face which joins the two prism faces designed as specular surfaces (10, 12) to one another.

6. Beam-shaping device according to one of Claims 2 to 5, **characterized in that** the prism serving as beam splitter means (2) and as beam recombining means (2) is arranged in the beam-shaping unit (1, 16, 22, 23, 24, 25) in such a way that the two specular surfaces (10, 12) enclose an angle of 45° or -45° with the propagation direction (Z) of a light beam (5) to be shaped by the beam-shaping unit (1, 16, 22, 23, 24, 25).

7. Beam-shaping device according to one of Claims 4 to 6, **characterized in that** the component beam (8) running past the prism serving as beam splitter means (2) and as beam recombining means (2) strikes the beam deflecting means (3, 17) downstream of the prism in the propagation direction (Z), is deflected by the beam deflecting means such that it impinges on the second of the specular surfaces (12) in a direction opposite to the propagation direction (Z), and is reflected by said surface in the direction (Y) of the light beam (7) leaving the beam-shaping unit (1, 16, 22, 23, 24, 25).

8. Beam-shaping device according to one of Claims 1 to 7, **characterized in that** the beam deflecting means (3) are embodied as an imaging unit which effects a 1:-1 imaging of the component beam (8) striking it onto the second specular surface (12).

9. Beam-shaping device according to Claim 8, **characterized in that** the imaging unit substantially has a shape of a planarconvex lens, it being possible for the component beam (8) to enter the imaging unit through the convex lens face (13), to be reflected at the plane face (14), which is preferably silvered, and to emerge from the convex lens face (3) in the direction of the second specular surface (12) of the beam recombining means (2).

10. Beam-shaping device according to one of Claims 1 to 7, **characterized in that** the beam deflecting means (17) are designed as a prism, it being possible for the component beam (8) striking the prism to be deflected by the latter in a direction opposite to the propagation direction (Z) onto the second specular surface (12) of the beam recombining means (2).

11. Beam-shaping device according to Claim 10, **characterized in that** the prism serving as beam deflecting means (17) likewise has a base face (18) designed as an isosceles right-angled triangle, the component beam (8) entering the prism passing perpendicularly through the prism face joining the base sides of these triangles to one another and being reflected at each of the two other prism faces (20, 21) at an angle of substantially 45°, the two prism faces (20, 21) at which the component beam (8) is reflected preferably being silvered.

12. Beam-shaping device according to one of Claims 1 to 11, **characterized in that** the beam-shaping device comprises more than one beam-shaping unit (22, 23, 24, 25), in particular three or four beam shaping units (22, 23, 24, 25) which are arranged next to one another in such a way that the cross section of the light beam is reduced in each of the beam-shaping units (22, 23, 24, 25) in a first direction, and enlarged in a second direction perpendicular thereto.

13. Beam-shaping device according to one of Claims 1 to 12, **characterized in that**, by comparison with the cross section (4) of the light beam (5) entering the beam-shaping unit (1, 16, 22, 23, 24, 25) or one of the beam-shaping units (1, 16, 22, 23, 24, 25), cross section (6) of the light beam (7) emerging from the beam-shaping unit (1, 16, 22, 23, 24, 25) or from one of the beam-shaping units (1, 16, 22, 23, 24, 25) is bisected in a first direction (X) and doubled in a second direction (XZ) perpendicular thereto.

14. An arrangement for launching into an optical fibre (29) a light beam (5) issuing from an elongated laser light source (22) and having an elongated cross section (4), comprising a laser light source (26), a collimator unit (27) arranged downstream thereof in the beam direction (Z), a beam-shaping device having the features of one of Claims 1 to 13, and a focusing unit (28) which is arranged downstream of the beam-shaping device and can focus the light beam impinging on it onto an optical fibre (29).

## Revendications

1. Dispositif de modelage de rayon pour le modelage de la section transversale (4, 6) d'un rayon lumineux (5, 7) comprenant au moins une unité de modelage de rayon (1, 16, 22, 23, 24, 25) comprenant
a) des moyens diviseurs de rayon (2),
b) des moyens de déviation de rayon (3, 17) ainsi que
c) des moyens d'unification de rayon (2),
d) les moyens diviseurs de rayon (2) pouvant diviser un rayon lumineux (5) qui vient heurter l'unité de modelage de rayon (1, 16, 22, 23, 24, 25) en deux rayons partiels (8, 9),
e) les moyens d'unification de rayon (2) servant également de moyens diviseurs de rayon (2),
f) l'un des deux rayons partiels (8) passant devant les moyens d'unification de rayon (2) servant de moyens diviseurs de rayon (2) sur les moyens de déviation de rayon (3) et pouvant être dévié par les moyens de déviation de rayon (2, 17), alors que l'autre rayon partiel (9) peut venir heurter directement les moyens d'unification de rayon (2),
g) les moyens d'unification de rayon (2) pouvant réunir les deux rayons partiels (8, 9) de telle sorte que la section transversale (6) du rayon lumineux (7) sortant de l'unité de modelage de rayon (1, 16, 22, 23, 24, 25), en comparaison de la section transversale (4) du rayon lumineux (5) qui pénètre dans l'unité de modelage de rayon (1, 16, 22, 23, 24, 25), soit rétrécie dans une première direction (X) et agrandie dans une deuxième direction (Y, Z) perpendiculaire à celle-ci, **caractérisé en ce**
h) **que** les moyens d'unification de rayon (2) comprennent deux surfaces réfléchissantes (10, 12) qui forment entre elles un angle, chacun des rayons partiels (8, 9) à réunir par les moyens d'unification de rayon pouvant être réfléchi sur l'une des surfaces réfléchissantes (10, 12),
i) **en ce que** le rayon partiel (8) qui passe devant les moyens d'unification de rayon (2) servant de moyens diviseurs de rayon (2) peut être dévié par les moyens de déviation de rayon (3, 17) de telle sorte qu'il vienne heurter la deuxième des surfaces réfléchissantes (12) et qu'il soit réfléchi par celle-ci dans la direction (Y) du rayon lumineux (7) qui quitte l'unité de modelage de rayon (1, 16, 22, 23, 24, 25), et
j) **en ce que** l'autre des deux rayons partiels (9) peut venir heurter directement la première des deux surfaces réfléchissantes (10) et peut être réfléchi par celle-ci dans la direction (Y) du rayon lumineux (7) qui sort de l'unité de modelage de rayon (1, 16, 22, 23, 24, 25).

2. Dispositif de modelage de rayon selon la revendication 1, **caractérisé en ce qu'**il est prévu un prisme unique comme moyen d'unification de rayon (2) et en même temps comme moyen diviseur de rayon (2), les surfaces (10, 12) réfléchissant les rayons partiels (8, 9) étant réalisées sous la forme de surfaces de ce prisme, de préférence réfléchissantes.

3. Dispositif de modelage de rayon selon la revendication 2, **caractérisé en ce que** le prisme faisant office de moyen d'unification de rayon (2) et en même temps de moyen diviseur de rayon (2) présente une surface de base (11) réalisée sous la forme d'un triangle rectangle isocèle, les surfaces réfléchissantes (10, 12) étant les surfaces du prisme qui s'étendent respectivement entre les côtés de l'angle droit de la surface de base (11) de sorte que les surfaces réfléchissantes (1,0 12) forment entre elles un angle de 90°.

4. Dispositif de modelage de rayon selon l'une des revendications 2 ou 3, **caractérisé en ce que** le prisme faisant office de moyen diviseur de rayon (2) ou de moyen d'unification de rayon (2) est disposé de telle sorte dans l'unité de modelage de rayon (1, 16, 22, 23, 24, 25) qu'un rayon lumineux (5) à modeler qui vient heurter l'unité de modelage de rayon (1, 16, 22, 23, 24, 25) soit partagé en deux moitiés dans une première direction (X) qui est pour l'essentiel perpendiculaire au sens de propagation (Z) du rayon lumineux (5) de telle sorte que l'un des deux rayons partiels (8) produits par ce partage passe devant le prisme sur les moyens de déviation de rayon (3) et que l'autre des deux rayons partiels (9) produits par ce partage vienne directement heurter la première des deux surfaces réfléchissantes (10) et soit réfléchi par celle-ci dans la direction (Y) du rayon lumineux (7) qui sorte de l'unité de modelage de rayon (1, 16, 22, 23, 24, 25).

5. Dispositif de modelage de rayon selon l'une des revendications 2 à 4, **caractérisé en ce que** le prisme faisant office de moyen diviseur de rayon (2) ou de moyen d'unification de rayon (2) est disposé de telle sorte dans l'unité de modelage de rayon (1, 16, 22, 23, 24, 25) qu'un rayon lumineux (5) qui vient heurter l'unité de modelage de rayon (1, 16, 22, 23, 24, 25) se propage parallèlement à une surface du prisme qui relie entre elles les deux surfaces du prisme réalisées sous la forme de surfaces réfléchissantes (10, 12).

6. Dispositif de modelage de rayon selon l'une des revendications 2 à 5, **caractérisé en ce que** le prisme faisant office de moyen diviseur de rayon (2) ou de moyen d'unification de rayon (2) est disposé de telle sorte dans l'unité de modelage de rayon (1, 16, 22, 23, 24, 25) que les deux surfaces réfléchissantes (10, 12) forment un angle de 45° ou de -45° avec le sens de propagation (Z) d'un rayon lumineux (5) à modeler avec l'unité de modelage de rayon (1, 16, 22, 23, 24, 25).

7. Dispositif de modelage de rayon selon l'une des revendications 4 à 6, **caractérisé en ce que** le rayon partiel (8) qui passe devant le prisme faisant office de moyen diviseur de rayon (2) ou de moyen d'unification de rayon (2) vient heurter les moyens de déviation de rayon (3, 17) dans le sens de propagation (Z) derrière le prisme, lesquels dévient le rayon partiel (8) de telle sorte qu'il vienne heurter la deuxième des surfaces réfléchissantes (12) dans une direction opposée au sens de propagation (Z) et qu'il soit réfléchi par celle-ci dans la direction (Y) du rayon lumineux (7) qui quitte l'unité de modelage de rayon (1, 16, 22, 23, 24, 25).

8. Dispositif de modelage de rayon selon l'une des revendications 1 à 7, **caractérisé en ce que** les moyens de déviation de rayon (3) sont réalisés sous la forme d'une unité de représentation qui réalise une représentation 1:-1 du rayon partiel (8) qui vient la heurter sur la deuxième surface réfléchissante (12).

9. Dispositif de modelage de rayon selon la revendication 8, **caractérisé en ce que** l'unité de représentation présente pour l'essentiel la forme d'une lentille plan-convexe, le rayon partiel (8) pouvant pénétrer dans l'unité de représentation à travers la surface de lentille convexe (13), pouvant être réfléchi au niveau de la surface plane (14), laquelle est de préférence réfléchissante, et pouvant sortir de la surface de lentille convexe (3) en direction de la deuxième surface réfléchissante (12) des moyens d'unification de rayon (2).

10. Dispositif de modelage de rayon selon l'une des revendications 1 à 7, **caractérisé en ce que** les moyens de déviation de rayon (17) sont réalisés sous la forme d'un prisme, le rayon partiel (8) qui vient heurter le prisme pouvant être dévié par celui-ci sur la deuxième surface réfléchissante (12) des moyens d'unification de rayon (2) dans une direction opposée au sens de propagation (Z).

11. Dispositif de modelage de rayon selon la revendication 10, **caractérisé en ce que** le prisme faisant office de moyen de déviation de rayon (17) présente lui aussi une surface de base (18) réalisée sous la forme d'un triangle rectangle isocèle, le rayon partiel (8) pénétrant dans le prisme traversant perpendiculairement la surface de prisme qui relie ensemble les côtés de la base de ce triangle et étant réfléchi au niveau de chacune des deux autres surfaces de prisme (20, 21) suivant un angle essentiellement de 45°, les deux surfaces de prisme (20, 21) sur lesquelles est réfléchi le rayon partiel (8) étant de préférence réfléchissantes.

12. Dispositif de modelage de rayon selon l'une des revendications 1 à 11, **caractérisé en ce que** le dispositif de modelage de rayon comprend plus d'une unité de modelage de rayon (22, 23, 24, 25), notamment trois ou quatre unités de modelage de rayon (22, 23, 24, 25) qui sont disposées l'une après l'autre de telle sorte que dans chacune des unités de modelage de rayon (22, 23, 24, 25), la section transversale du rayon lumineux soit rétrécie dans une première direction et agrandie dans une deuxième direction perpendiculaire à celle-ci.

13. Dispositif de modelage de rayon selon l'une des revendications 1 à 12, **caractérisé en ce que** la section transversale (6) du rayon lumineux (7) qui sort de l'unité de modelage de rayon (1, 16, 22, 23, 24, 25) ou de l'une des unités de modelage de rayon (1, 16, 22, 23, 24, 25), en comparaison de la section transversale (4) du rayon lumineux (5) qui pénètre dans l'unité de modelage de rayon (1, 16, 22, 23, 24, 25) ou dans l'une des unités de modelage de rayon (1, 16, 22, 23, 24, 25), est divisée par deux dans une première direction (X) et doublée dans une deuxième direction (XZ) perpendiculaire à celle-ci.

14. Arrangement pour injecter un rayon lumineux (5) ayant une section transversale allongée (4) et sortant d'une source de lumière laser allongée (22) dans une fibre optique (29), comprenant une source de lumière laser (26), une unité de collimation (27) disposée derrière celle-ci dans le sens du rayon (Z), un dispositif de modelage de rayon ayant les caractéristiques de l'une des revendications 1 à 13 ainsi qu'une unité de concentration (28) disposée derrière le dispositif de modelage de rayon qui peut concentrer le rayon lumineux qui vient la heurter sur une fibre optique (29).
